# FASCICULE DE BREVET EUROPEEN

(11) **EP 0 318 477 B1**
(45) Date de publication et mention de la délivrance du brevet: **17.03.1993**
(21) Numéro de dépôt: 87903709.1
(22) Date de dépôt: 10.06.1987
(51) Int. Cl.: B64C 27/02, B64C 5/16

(54) **PERFECTIONNEMENTS AUX AERONEFS A DECOLLAGE VERTICAL**
SENKRECHTSTARTER
IMPROVEMENTS TO VERTICAL TAKE-OFF AIRCRAFT

(43) Date de publication de la demande: 07.06.1989
(73) Titulaire: RABOUYT, Denis, 92140 Clamart (FR)
(72) Inventeur: RABOUYT, Denis, 92140 Clamart (FR)
(86) Numéro de dépôt international: FR8700205
(87) Numéro de publication internationale: WO8809746

(56) Documents cités:
- US-A- 2 067 634
- US-A- 2 405 244
- US-A-22 171 108

## Description

La présente invention concerne les aéronefs à sustentation par voilure tournante et empennage auxiliaire fixe, notamment l'autogire.

Malgré ses avantages sur l'hélicoptère en ce qui concerne la simplicité de fabrication, donc le prix de revient, et la sûreté de fonctionnement, l'autogire présente l'inconvénient de nécessiter une piste de décollage, si courte soitelle, alors que l'hélicoptère décolle à la verticale.

Pour remédier à cet inconvénient, on a proposé d'utiliser le rotor de l'autogire comme hélice tractive verticale. A cet effet, le rotor est embrayé sur un moteur qui peut être le même que celui de l'hélice propulsive, et, le pas des pales étant à peu près nul, lancé à grande vitesse. Lorsque le rotor a atteint la vitesse désirée, on passe les pales au grand pas, ce qui provoque le décollage de l'autogire.

Malheureusement, au moment du décollage, l'autogire s'engage au cabré mettant en jeu l'équilibre de l'appareil qui peut aller même jusqu'à se renverser. Pratiquement tout "saut" de l'autogire au décollage est dangereux au delà de 5 mètres et, dans ces conditions, un tel décollage ne peut être considéré comme un véritable décollage vertical puisqu'il ne peut être pratiqué que dans un environnement immédiat convenable.

La présente invention a précisément pour but de permettre un véritable décollage vertical, donc bien au delà de 5 mètres, aux autogires dont la sustentation est assurée par une voilure tournante et un empennage auxiliaire fixe en vol.

Selon l'invention, l'aéronef est muni de moyens permettant à une partie de l'empennage montée sur un axe de tourner fou autour de cet axe de manière que le bord de fuite de l'empennage puisse prendre une position inclinée vers le bas par rapport à sa position normale de vol.

Il est vrai que le brevet USA 2 067 634 a prévu que, dans certaines conditions exceptionnelles, un violent effort instantané puisse tendre à provoquer un léger effet de girouette sur un empennage articulé autour d'un axe. Il s'agit de faciliter la reprise d'un vol au cours d'une descente rapide. Lorsque le pilote change sustantiellement l'angle d'incidence de l'aéronef et remet les gaz, l'hélice propulsive provoque un fort et soudain courant d'air, l'empennage tend à se mouvoir comme une girouette sur un faible débattement autour de l'horizontale. Mais il est précisé à plusieurs reprises que, mis à part ce léger effet de girouette de faible amplitude, l'empennage ne peut bouger que sous la commande positive du pilote. Il n'est donc aucunement prévu que l'empennage puisse, en quelque circonstance que ce soit, tourner fou autour de son axe.

Suivant une réalisation intéressante de l'invention, la partie de l'empennage qui peut être inclinée par rapport à sa position normale de vol est montée sur un axe sensiblement parallèle au plan de rotation de la voilure de l'aéronef.

Les moyens permettant la réalisation de l'invention peuvent avantageusement être constitués d'une tringlerie avec renvois d'angle, dont au moins un est muni d'un dispositif de verrouillage de l'empennage en position de vol.

Ces moyens peuvent même prévoir un verrouillage automatique de l'empennage réalisé par celui-ci lorsqu'il atteint sa position normale de vol.

D'autres caractéristiques et avantages de l'invention apparaîtront au cours de la description qui va suivre, en relation avec les dessins joints illustrant une réalisation de l'invention donnée à titre indicatif et non limitatif.

La figure 1 montre une vue en plan d'un autogire.

La figure 2 montre une vue en élévation de la figure 1.

La figure 3 est une coupe partielle, à grande échelle, suivant les flèches III-III de la figure 1.

La figure 4 est une vue suivant les flèches IV-IV de la figure 3, mais à échelle réduite.

La figure 5 montre schématiquement l'ensemble de la commande de l'empennage.

La figure 6 montre à grande échelle un détail de la figure 5.

Les figures 7 et 8 montrent, à grande échelle, un autre détail de la figure 5, la figure 7 étant une coupe suivant VII-VII de la figure 8 et la figure 8 une coupe suivant VIII-VIII de la figure 7.

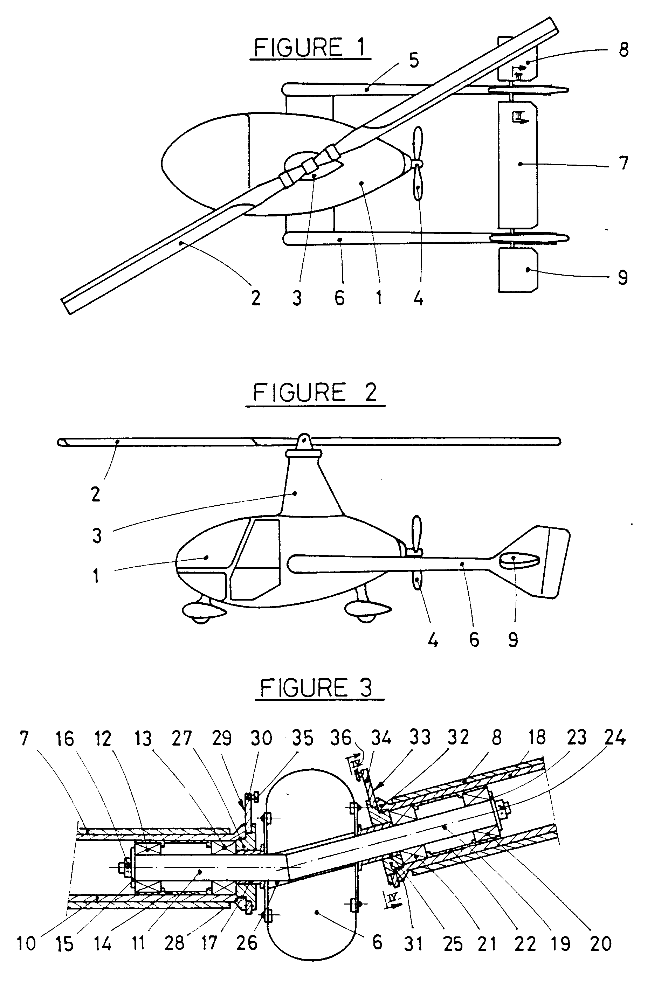

Sur les figures 1 et 2, l'autogire comprend un corps 1 portant une hélice propulsive 4, un rotor 2 monté sur un support 3, et deux poutres 5 et 6 portant elles-mêmes un empennage en trois parties : une partie intérieure 7 et deux parties extérieures 8 et 9.

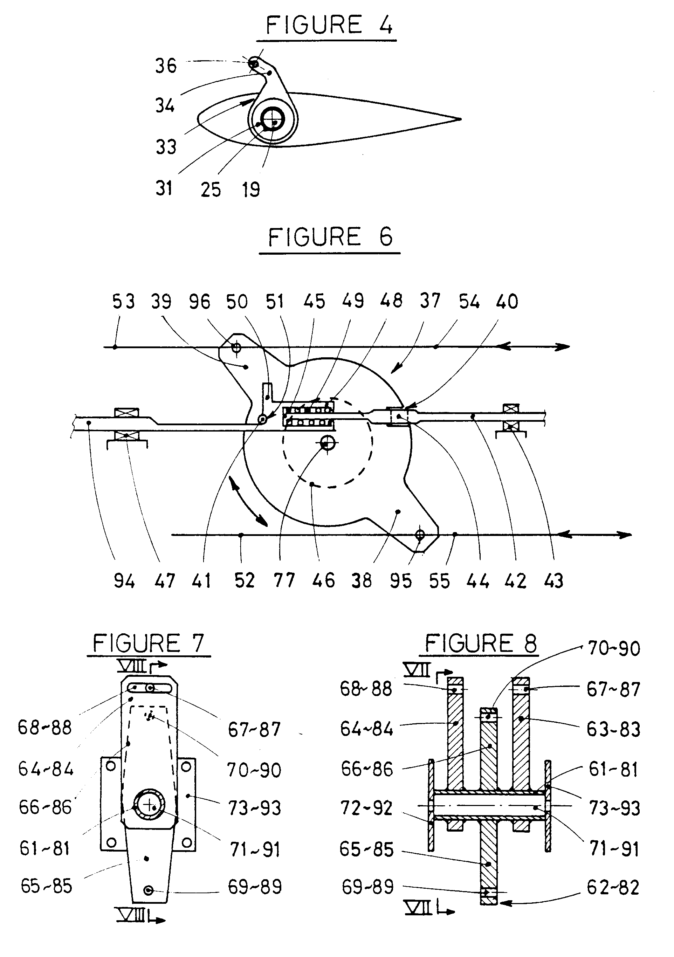

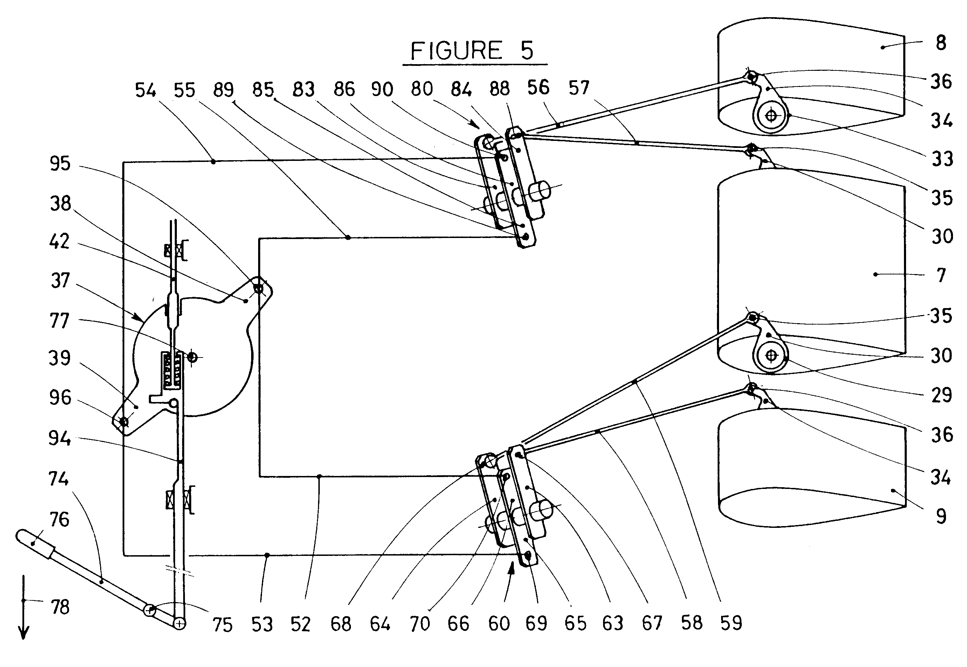

La fixation de cet empennage sur les poutres est illustrée par les figures 3 et 4.

La partie intérieure 7 comporte sur toute sa largeur un longeron tubulaire 10 qui est porté, à chacune de ses extrémités, par une fusée 11 sur laquelle sont montés deux roulements 12 et 13 entretoisés par un manchon 14. Ces roulements et le manchon entretoise sont maintenus sur la fusée 11, d'une part, par une rondelle 15 tenue par un écrou 16 vissé sur l'extrémité filetée de la fusée et, d'autre part, par une bague 17 soudée sur la fusée 11 et vissée sur la poutre 5.

Le longeron 10 se termine par un embout 28, dans lequel est vissé un bouchon fileté 27. Une pièce 29, prise entre l'embout 28 et le bouchon 27, porte un levier 30 équipé d'un maneton 35.

La fixation de la partie extérieure 8 de l'empennage est identique et comporte un longeron tubulaire 18 porté par une fusée 19 par l'intermédiaire de deux roulements 20 et 21 entretoisés par un manchon 22, les roulements étant maintenus en place par une rondelle 23 et un écrou 24 et par une bague soudée sur la fusée 19 et vissée sur la poutre 5 et le tout étant fermé par un bouchon fileté 31 qui maintient contre l'embout 32 une pièce 33 identique à la pièce 29 avec un levier 34 portant un maneton 36.

La fusée 19 dont l'axe est légèrement incliné par rapport à l'axe de la fusée 11 est soudée sur cette dernière, l'ensemble des deux fusé es traversant la poutre 5 par un passage 26 prévu à cet effet.

La fixation de la partie extérieure 9 est symétrique à la fixation de 8 et comprend notamment une pièce 33 avec un levier 34 portant un maneton 36.

Chaque partie 7, 8 ou 9 de l'empennage est ainsi montée rotative par rapport aux poutres 5 et 6 et donc par rapport au corps de l'autogire et son axe de rotation a été choisi non seulement en avant de son centre de gravité, mais également en avant de son centre de poussée.

Le dispositif de manoeuvre de ces parties 7,8 et 9 comprend un système de verrouillage, un système de transmission et un système de commande.

Le système de commande comprend une tige de commande 94 rigide et articulée sur un levier 74. Le levier est lui-même articulé en 75 sur un point fixe par rapport à l'autogire et porte une poignée 76.

L'extrémité de la tige de commande 94 participe également au système de verrouillage qui comprend un renvoi 37 en forme de disque, monté rotatif autour d'un axe 77 fixe par rapport à l'autogire. Ce renvoi comporte une encoche 40, un maneton 41 et deux bras 38 et 39 diamétralement opposés et dont chacun porte une perforation, respectivement 95 et 96. Un disque à friction 46 est monté sur l'axe 77 contre le renvoi 37.

Une tige rigide 42 coulissant dans un palier-coulisse 43 porte une protubérance 44 et se termine par un talon circulaire 45.

La tige de commande 94 coulissant dans le palier 47, comporte, à son extrémité, un doigt 50, à l'équerre de la tige 94 et comprenant une encoche 51 presque semi-circulaire, et une chambre 48 recevant un ressort 49 qui s'appuye,d'une part, sur une extrémité de la chambre 48 et, d'autre part, sur le talon circulaire 45 de la tige 42.

Le système de transmission logé, pour partie, dans le corps de l'autogire et, pour partie, dans les deux poutres 5 et 6, comprend deux renvois 60 et 80 illustrés par les figures 7 et 8, les quatre câbles 52, 53, 54 et 55 et quatre biellettes 56, 57, 58 et 59.

Les renvois 60 et 80 sont identiques et disposés dans des logements prévus à cet effet dans les peut res 5 et 6 et munis d'une trappe de visite pour accès.

Le renvoi 60 est constitué d'un tube 61 portant quatre leviers 63, 64, 65 et 66 et tournant sur un axe fixe 71.

Le renvoi 80 est constitué d'un tube 81 portant quatre leviers 83, 84, 85 et 86 et tournant sur un axe fixe 91.

Les leviers 65 et 66 forment une seule et même pièce 62 et présentent deux perforations circulaires 69 et 70 situées à égale distance de l'axe de pivotement du renvoi 60.

Les leviers 85 et 86 forment également une seule et même pièce 82 et présentent aussi deux perforations circulaires 89 et 90 situées a égale distance de l'axe de pivotement du renvoi 80.

Les leviers 63 et 64 sont perforés, au-delà du levier 66, à égale distance de l'axe de pivotement du renvoi 60. Mais la perforation 67 du levier 63 est circulaire tandis que la perforation 68 du levier 64 se présente sous la forme d'une lumière oblongue.

De même, les leviers 83 et 84 portent, le premier une perforation circulaire 87, et le second, une lumière oblongue 88.

Enfin, les axes 71 et 91, sur lesquels tourillonnent les renvois 60 et 80, sont tenus respectivement par les plaques 72-73 et 92-93 fixées de part et d'autre des poutres 5 et 6.

La tringlerie est illustrée schématiquement sur la figure 5.

Les câbles 52 et 55, sous gaîne, sont accrochés à une de leurs extrémités à la perforation 95 du bras 38 du renvoi 37, le câble 52 étant accroché à son autre extrémité à la perforation 70 du levier 66 du renvoi 60, tandis que le câble 55 est accroché à son autre extrémité à la perforation 89 du levier 85 du renvoi 80.

Les câbles 53 et 54 sont accrochés à la perforation 96 du bras 39 du renvoi 37, le câble 53 étant accroché à son autre extrémité à la perforation 69 du levier 65 du renvoi 60, tandis que le câble 54 est accroché à son autre extrémité à la perforation 90 du levier 86 du renvoi 80.

La biellette 56 comporte à une extrémité un maneton s'engageant dans la perforation 87 du levier 83 du renvoi 80 et, à son autre extrémité, une perforation dans laquelle s'engage le maneton 36 du levier 34 de la pièce 33 portée par la partie extérieure 8 de l'empennage.

La biellette 58 comporte à une extrémité un maneton s'engageant dans la perforation 67 du levier 63 du renvoi 60 et, à son autre extrémité, une perforation dans laquelle s'engage le maneton 36 du levier 34 de la pièce 33 portée par la partie extérieure 9 de l'empennage.

La biellette 57 comporte à une extrémité un maneton s'engageant dans la lumière 88 du levier 84 du renvoi 80 et, à son autre extrémité, une perforation dans laquelle s'engage le maneton 35 du levier 30 de la pièce 29 porté par la partie intérieure de l'empennage du côté de sa partie extérieure 8.

La biellette 59 comporte à une extrémité un maneton s'engageant dans la lumière 68 du levier 64 du renvoi 60 et, à son autre extrémité, une perforation dans laquelle s'engage le maneton 35 du levier 30 de la pièce 29 portée par la partie intérieure de l'empennage du côté de sa partie extérieure 9.

Les biellettes 56 et 58 sortent en biais, du côté extérieur des poutres 5 et 6, la première en direction du maneton 36 de la partie extérieure 8 de l'empennage, et la seconde, en direction du maneton 36 de 9. Les biellettes 59 et 57 sortent en biais, du côté intérieur des poutres, en direction des manetons 35 de la partie intérieure 7 de l'empennage.

Dans ces conditions, le fonctionnement s'établit comme décrit ci-après.

L'autogire étant à l'arrêt, le levier de commande 74 se trouve bloqué dans la position dessinée figure 5, c'est-à-dire que la tige de commande 94 est en position de verrouillage du renvoi 37.

D'une part, l'encoche 51 du doigt 50 bloque le maneton 41 et, d'autre part, la protubérance 44 de la tige 42 est engagée dans l'encoche 40 sous l'action du ressort 49 appuyant le talon 45 de la dite tige contre le fond de la chambre 48.

Le disque à friction 46 a pour but d'amortir les vibrations pouvant apparaître au niveau de l'empennage, par exemple par suite de turbulences. En augmentant plus ou moins la pression de ce disque sur le renvoi 37, on peut augmenter plus ou moins l'amortissement de ces vibrations.

Dans cette disposition, le câble 52 maintient la partie supérieure du renvoi 60 inclinée vers l'avant, de même que le câble 54 maintient la partie supérieure du renvoi 80 inclinée vers l'avant, la partie inférieure de ces renvois étant plus ou moins repoussée vers l'arrière par les câbles 53 et 55.

Grâce à ces actions, le levier 83 du renvoi 80 maintient la partie extérieure 8 de l'empennage dans la position de vol, grâce à la biellette 56, de même que le levier 63 du renvoi 60 maintient la partie extérieure 9 de l'empennage dans la position de vol grâce à la biellette 58.

Parallèlement, les leviers 84 et 64 maintiennent la partie intérieure 7 de l'empennage dans la position de vol grâce aux biellettes 57 et 59.

Au démarrage, le pilote embraye classiquement le rotor 1 sur son moteur de commande, les pales du rotor étant au pas zéro. Parallèlement, ou simultanément, le moteur de l'hélice propulsive a été lancé.

Lorsque le rotor a atteint le régime de rotation suffisant pour assurer le décollage de l'autogire, le pilote met simultanément le rotor au grand pas et manoeuvre le levier de commande 74 dans le sens de la flèche 78.

Cette manoeuvre du levier 74 a pour résultat de repousser la tige de commande 94, dégageant ainsi du maneton 41, l'encoche 51 du doigt 50,et sortant de l'encoche 40, la protubérance 44 de la tige 42.

Ainsi les câbles 52, 53, 54 et 55 sont-ils déverrouillés, de même que les biellettes 56, 57, 58 et 59 et, dans ces conditions, les trois parties 7, 8 et 9 de l'empennage ne sont plus maintenues dans la position dessinée figures 1 2 et 5 et peuvent donc tourner respectivement autour des fusées 10 et 18.

Tout d'abord, du fait que leur centre de gravité est situé à l'arrière des axes sur lesquels elles tournent, les trois parties de l'empennage vont avoir tendance à se mettre verticales et non plus horizontales.

De plus, les deux parties extérieures 8 et 9 de l'empennage reçoivent un flux d'air sensiblement vertical venant des pales du rotor tournant à grande vitesse, puisqu'il s'agit d'une vitesse de décollage et ce flux sera d'autant plus fort qu'ils sont situés pratiquement à l'extrémité des pales. Compte tenu de ce que leurs centres de poussée sont également en arrière des axes des fusées sur lesquelles elles sont montées, les deux parties extérieures 8 et 9 vont tendre à prendre la même position verticale que sous la simple gravité.

Par contre, la partie intérieure 7 de l'empennage reçoit, d'une part, un flux d'air vertical venant du rotor, mais, d'autre part, un flux d'air horizontal venant de l'hélice de propulsion : sa position sera donc plus ou moins inclinée, en fonction des caractéristiques des deux flux qu'elle reçoit.

Dans ces conditions, et grâce à son profil nécessairement aérodynamique puisqu'il s'agit d'un organe de sustentation, l'empennage n'oppose au cours du décollage vertical de l'autogire qu'une faible résistance au flux d'air venant du rotor et ne risque donc pas de faire engager l'autogire au cabré.

Lorsque l'autogire décolle, le pilote débraye le rotor 1 qui tourne alors en autorotation et n'envoie sur l'empennage qu'un flux décroissant, tandis que le flux horizontal de l'hélice propulsive vers la partie intérieure de l'empennage reste constant. Grâce au fait que les biellettes 57 et 59 ont leur maneton engagé dans des lumières oblongues 68 et 88, la partie intérieure 7 de l'empennage peut prendre une position intermédiaire entre la position au moment du décollage et la position de vol, position intermédiaire qui peut d'ailleurs varier puisqu'elle sera exactement la résultante des deux flux reçus.

En même temps qu'il débraye le rotor 1, le pilote manoeuvre le levier 74 en sens contraire de la flèche 78. Dans ce mouvement, la tige de commande 94 tend à faire pivoter le renvoi 37 vers la position dessinée figure 5.

Par ailleurs le rotor tourne à un régime de plus en plus bas et bien éloigné de son régime de rotation au décollage et,lorsqu'il atteint son régime de croisière, l'air ne traverse plus le rotor de haut en bas, mais de bas en haut. L'action du rotor sur l'empennage a donc peu à peu diminué jusqu'à cesser totalement et ainsi laisser la place à celle de l'hélice 4 et du vent relatif.

L'empennage a donc alors repris sa position de vol faisant pivoter les renvois 80 et 60 par les biellettes 56, 57, 58 et 59 ; le renvoi 37 reprend lui-même sa position dessinée figures 5 et 6 et, dans cette position, sous l'action du ressort 49, la protubérance 44 s'engage dans l'encoche 41 verrouillant ainsi la position angulaire du renvoi 37. Ainsi tout l'empennage 7, 8 et 9 est-il verrouillé en position de vol.

Il est entendu que l'on peut, sans sortir de l'invention telle que revendiquée, modifier tel ou tel détail ou adopter telle autre construction, de manière à obtenir les mêmes résultats.

Par exemple, les câbles de transmission peuvent être remplacés par des tiges rigides montées sur renvois d'angle à 90° à leur passage du corps de l'aéronef dans les poutres portant l'empennage.

Par exemple également, la commande du dispositif de verrouillage de l'empennage pourrait être synchronisée sur la commande de mise au grand pas du rotor, la tige de commande 94 pouvant alors être éventuellement actionnée par un système électrique ou autre.

Le système mécanique décrit pour le verrouillage de l'empennage pourrait être remplacé par un système électro-magnétique, par exemple sous la forme de doigts disposés sur les poutres 5 et 6 et agissant, en position de vol, comme des clenches, sous l'action de ressorts les repoussant dans des orifices prévus à cet effet dans les différentes parties de l'empennage pour les immobiliser. Ces doigts pourraient être rappelés par des électro-aimants au moment du décollage, puis relâchés, un profil en dent de loup des doigts permettant à l'empennage de se verrouiller automatiquement lors de la remontée à l'horizontale sous l'effet du vent relatif et éventuellement de l'hélice propulsive.

## Revendications

1. Aéronef à sustentation par voilure tournante et empennage auxiliaire articulé, caractérisé en ce qu'il comporte des moyens qui permettent de faire tourner fou au moins une partie du dit empennage, de manière à permettre que le bord de fuite de l'empennage puisse prendre une position inclinée vers le bas par rapport à sa position normale de vol.

2. Aéronef selon la revendication 1 caractérisé en ce que la partie de l'empennage pouvant prendre une position inclinée par rapport à sa position normale de vol est montée sur axe ( 11, 19) sensiblement parallèle au plan de rotation de la voilure tournante de sustentation.

3. Aéronef selon l'une des revendications précédentes caractérisé en ce qu'il comporte des moyens de verrouillage, en position de vol, de chaque partie de l'empennage.

4. Aéronef selon la revendication 3 caractérisé en ce que chaque partie d'empennage assure son propre verrouillage par son retour en position de vol.

5. Aéronef selon l'une des revendications 3 ou 4 caractérisé en ce que les moyens de faire tourner fou autour de son axe la partie inclinable de l'empennage sont constitués par une tringlerie avec renvois dont au moins un (37) est muni de moyens de verrouillage (41-51 , 40-44) de sa position angulaire.

6. Aéronef selon la revendication 5 caractérisé en ce que l'un des renvois de la tringlerie porte un dispositif à friction (46) réglable.

7. Aéronef selon l'une des revendications 5 ou 6 dans lequel l'empennage est divisé en trois parties portées par deux poutres parallèles, une partie étant située entre deux poutres et les deux autres à l'extérieur, caractérisé en ce que les parties extérieures (8 , 9) de l'empennage comportent chacune un maneton (35) manoeuvré par une biellette (56 , 58) articulée sur un renvoi (60 , 80) faisant partie de la tringlerie, les mouvements des deux renvois (60 , 80) étant synchronisés par la dite tringlerie.

## Claims

1. Vertical take-off lift aircraft with rotary wings and articulated auxiliary stabilizer wherein it comprises means that enable to make turn freely at least a part of the said stabilizer, in such a way as to enable the tail edge of the stabilizer to take up a downward inclined position with respect to its normal flight position.

2. Aircraft according to claim 1 wherein the part of the stabilizer that can take up an inclined position with respect to its normal flight position is mounted upon an axis (11, 19) noticeably parallel to the rotation plan of the lift rotary wings.

3. Aircraft according to one of the previous claims wherein it comprises, in flight postion, locking means for each part of the stabilizer.

4. Aircraft according to claim 3 wherein each stabilizer part ensures its own locking by return to its flight position.

5. Aircraft according to one of claims 3 or 4 wherein the means to make the inclinable part of the stabilizer turn freely around its axis are constituted by a bell-crank linkage one lever (37) of which at least is equipped with means (41-51, 40-44) locking it into its angular position.

6. Aircraft according to claim 5 wherein one of the bell-cranks of the linkage carries a friction adjustable device (46).

7. Aircraft according to one of claims 5 or 6 in which the stabilizer is divided into three parts carried by two parallel girders, one part being situated between two girders and the other two, wherein the outer parts (8, 9) of the stabilizer each comprise a clankpin (35) operated by a link (56, 58) articulated in relation to a bell-crank lever (60, 80) forming part of the linkage, the bell-crank levers being synchronised by the said linkage.

## Patentansprüche

1. Luftfahrzeug mit Drehflügelauftrieb und angelenktem Hilfsleitwerk, dadurch gekennzeichnet, daß es Mittel besitzt, die es ermöglichen, wenigstens einen Teil des besagten Leitwerks lose rotieren zu lassen, dergestalt, daß die Hinterkante des Leitwerks eine gegenüber ihrer normalen Flugstellung nach unten geneigte Stellung einnehmen kann.

2. Luftfahrzeug nach Anspruch 1, dadurch gekennzeichnet daß der Leitverkteil, der eine gegen·ber seiner normalen Flugstellung geneigte Stellung einnehmen kann, auf eine zur Rotationsebene des Auftriebsdrehflügels etwa parallele Achse (11, 19) montiert ist.

3. Luftfahrzeug nach einem der Vorangehenden Ansprüche, dadurch gekennzeichnet, daß es über Mittel zur Verriegelung eines jeden Leitwerksteils in Flugstellung verfügt.

4. Luftfahrzeug nach Anspruch 3, dadurch gekennzeichnet, daß jedes Leitverksteil seine eigene Verriegelung durch Rückkehr in Flugstellung bewirkt.

5. Luftfahrzeug nach einem der Ansprüche 3 oder 4, dadurch gekennzeichnet, daß die Mittel, um den neigbaren Teil des Leitwerks lose um seine Achse drehen zu lassen, sich zusammensetzen aus einem Gestänge mit Getrieben, von denen mindestens eins (37) mit Mitteln zur Verriegelung (41 - 51, 40 - 44) seiner Winkelstellung versehen ist.

6. Luftfahrzeug nach Anspruch 5, dadurch gekennzeichnet, daß eins der Getriebe des Gestänges eine verstellbare Reibungsvorrichtung trägt.

7. Luftfahrzeug nach einem der Ansprüche 5 oder 6, bei dem das Leitwerk in drei von zwei parallelen Trägern getragene Teile unterteilt ist, wobei ein Teil zwischen den zwei Trägern liegt und die beiden anderen außerhalb liegen, dadurch gekennzeichnet, daß die äußeren Teile (8,9) des Leitwerks über je einen Kurbelzapfen (35) verfügen, der durch eine Schwinge (56, 58) betätigt wird, die an ein zum Gestänge gehörendes Getriebe (60, 80) angelenkt ist, wobei die Bewegungen der beiden Getriebe (60, 80) durch das besagte Gestänge synchronisiert werden.
